(19) Europäisches Patentamt
European Patent Office
Office européen des brevets

(11) EP 3 580 677 B1

(12) EUROPEAN PATENT SPECIFICATION

(45) Date of publication and mention
of the grant of the patent:
**01.12.2021 Bulletin 2021/48**

(21) Application number: **18705473.9**

(22) Date of filing: **08.02.2018**

(51) Int Cl.:
**G06F 21/31** (2013.01)

(86) International application number:
**PCT/GB2018/050360**

(87) International publication number:
**WO 2018/146480 (16.08.2018 Gazette 2018/33)**

(54) **IDENTIFYING HUMAN INTERACTION WITH A COMPUTER**

IDENTIFIZIERUNG VON MENSCHLICHER INTERAKTION MIT EINEM COMPUTER

IDENTIFICATION D'INTERACTION HUMAINE AVEC UN ORDINATEUR

(84) Designated Contracting States:
**AL AT BE BG CH CY CZ DE DK EE ES FI FR GR
HR HU IE IS IT LI LT LU LV MC MK MT NL NO PL
PT RO RS SE SI SK SM TR**

(30) Priority: **08.02.2017 GB 201702082
08.02.2017 GB 201702081**

(43) Date of publication of application:
**18.12.2019 Bulletin 2019/51**

(73) Proprietor: **Sage (UK) Limited
Newcastle Upon Tyne NE28 9EJ (GB)**

(72) Inventor: **MARJORAM, Darrell John
Northwich CW9 7FE (GB)**

(74) Representative: **HGF
1 City Walk
Leeds LS11 9DX (GB)**

(56) References cited:
**US-A1- 2014 344 927     US-A1- 2016 315 948**

- **ZI CHU ET AL: "Blog or block: Detecting blog bots through behavioral biometrics", COMPUTER NETWORKS, vol. 57, no. 3, 1 February 2013 (2013-02-01), pages 634-646, XP055129268, ISSN: 1389-1286, DOI: 10.1016/j.comnet.2012.10.005**

**Description**

Background

It is sometimes desired to identify genuine human interaction with a computer. Genuine human interaction may be understood to mean human interaction with the computer by a human user for the purpose of which the computer, or software executing thereon, is provided. The genuine human interaction may be distinguished from interaction with the computer originating from software, sometimes known as a bot, or non-genuine human interaction which originates from a human but which has malicious intent. Human interaction for malicious intent may be carried out, not necessarily to disable or impede the computer but may be intended to, for example, establish multiple user-profiles or accounts on software executing on the computer or other illicit purpose.

Some solutions to the problem of distinguishing human interaction from that of software have been envisaged which involve the computer providing a test or challenge. For example, a Completely Automated Public Turing Test to Tell Computers and Humans Apart (CAPTCHA) has been utilised. Other tests have also been envisaged. However, a need to complete such a test may be inconvenient for genuine human users of the computer.

Zi Chu et al, "Blog or block: Detecting blog bots through behavioural biometrics", Computer Networks, vol 57, no. 3, 1 February 2013, pages 634-646 disclose a detection approach using behavioral biometrics, primarily mouse and keystroke dynamics, to distinguish between human and bot.

US 2014/344927 discloses devices, systems, and methods of detecting user identity, differentiating between users of a computerized service, and detecting a possible attacker. The methods include monitoring of user-side input-unit interactions, in general and in response to an interference introduced to user-interface elements.

US 2016/315948 discloses identifying a human or machine by sending a currently-triggered human or machine identification request to a server and receiving a first operation rendered by the server in response to the request, where the first operation identifies a human or machine. Further including expressing an operation track for identifying the human or machine and sending a second operation triggered in response to the first operation to the server to identify the human or machine on a triggering entity for the second operation based on a behavior characteristic model set in advance.

It is an object of embodiments of the invention to at least mitigate one or more of the problems of the prior art.

Summary of Invention

According to an aspect of the present invention there is provided methods and apparatus as set forth in the appended claims.

According to an aspect of the present invention there is provided a computer-implemented method of identifying human interaction with a computer, comprising receiving interaction data indicative of interaction with the computer, determining, at a first classifier, whether the interaction data is indicative of directed or random interaction with the computer, determining, at a second classifier, whether the interaction data is indicative of human or software-controlled interaction with the computer, and determining whether the interaction data is indicative of human interaction with the computer based on an output of at least one of the first and second classifiers.

According to another aspect of the present invention there is provided a computer-implemented method of identifying human interaction with a computer, comprising receiving interaction data indicative of interaction with the computer, determining, at a first classifier, whether the interaction data is indicative of human or random interaction with the computer, determining, at a second classifier, whether the interaction data is indicative of human or software-controlled interaction with the computer, and determining whether the interaction data is indicative of human interaction with the computer based on an output of at least one of the first and second classifiers.

According to another aspect of the present invention there is provided a computer-implemented method of identifying human interaction with a computer, comprising receiving interaction data indicative of interaction with the computer, determining, at a first classifier, whether the interaction data is indicative of human or random interaction with the computer, determining, at a second classifier, whether the interaction data is indicative of human or software-controlled interaction with the computer, and determining whether the interaction data is indicative of human interaction with the computer based on an output of at least one of the first and second classifiers.

The method may comprise providing an indication from the first classifier to the second classifier of the interaction data being indicative of human interaction with the computer.

The method may comprise determining that the interaction data is not indicative of human interaction with the computer based on an output of at least the first classifier.

The interaction data may be indicative of illegitimate interaction with the computer based on an output of only the first classifier. By illegitimate it is meant that the interaction is either software controlled i.e. a bot, or random interaction. The interaction data may be indicative of human interaction with the computer based on an output of both the first classifier and the second classifiers.

The interaction data optionally comprises event data indicative of an interaction events with a user-interface, UI, provided by the computer. The event data may be indicative of a low-level event with respect to the UI.

The event data may be indicative of one or more of movement of a pointing device, movement of a cursor responsive to touch applied to a touch sensitive device, activation of a control of the UI and operation of a keyboard associated with the computer.

The method may comprise determining one or more UI cues from the interaction data, wherein each UI cue is indicative of an interaction with the computer. Optionally the UI cue is indicative of a keystroke received at the computer.

The UI cue may be indicative of one or more of movement of the pointing device, clicking of the pointing device, or tapping on a touch sensitive device. When the UI cue is indicative of movement of the pointing device, the UI cue may be indicative of a predetermined duration of movement of the pointing device.

The method may comprise determining one or more parameters of the UI cue. The one or more parameters may comprise a duration of the UI cue. The one or more parameters may comprise a distance of the movement of the pointing device, a displacement of the movement of the pointing device, an average speed of the movement of the pointing device and a displacement angle of the movement of the pointing device.

The one or more parameters may comprise a movement efficiency of the pointing device. The movement efficiency may be determined based on a distance and displacement of the movement of the pointing device.

The one or more parameters optionally comprise a timing entropy for a plurality of UI cues. The one or more parameters may comprise a value indicative of a temporal uniformity, regularity and/or randomness of the interaction data. The value may be based upon timestamps associated with the interaction data.

The method may comprise grouping a plurality of UI cues into a cue group. The cue group may comprise at least three UI cues. Optionally the cue group comprises four UI cues. The cue group may, where appropriate, comprise more than four UI cues. The appropriateness may be determined based on empirical testing.

The first and second classifiers are arranged to determine whether the interaction data is indicative of human interaction with the computer based on one or more UI cues.

The first and second classifiers may be arranged to determine whether the interaction data is indicative of human interaction with the computer based on the one or more parameters associated with one or more UI cues.

The first and second classifiers may be arranged to determine whether the interaction data is indicative of human interaction with the computer based on the cue group. One or both of the first and second classifiers are decision tree classifiers. One or both of the first and second classifiers may be support vector machines (SVM) or random forest classifiers.

The method may comprise determining one or more parameters associated with each UI cue, determining a fingerprint identifying a plurality of UI cues, wherein the fingerprint is determined in dependence on the one or more parameters associated with each of the plurality of UI cues, and determining if the interaction with the computer is a replay of previous interaction with the computer based on the fingerprint and one or more fingerprints indicative of previous interaction with the computer.

According to an aspect of the present invention there is provided a computing apparatus, comprising a processor, computer readable memory associated with the processor, the memory storing computer executable instructions which, when executed by the processor, cause the processor to receive interaction data indicative of interaction with the computer, determine, at a first classifier, whether the interaction data is indicative of human or random interaction with the computer, determine, at a second classifier, whether the interaction data is indicative of human or software-controlled interaction with the computer, and determine whether the interaction data is indicative of human interaction with the computer based on an output of at least one of the first and second classifiers.

According to an aspect of the present invention there is provided computer software which, when executed by a computer, cause the computer to perform a method comprising steps of receiving interaction data indicative of interaction with the computer, determining, at a first classifier, whether the interaction data is indicative of human or random interaction with the computer, determining, at a second classifier, whether the interaction data is indicative of human or software-controlled interaction with the computer, and determining whether the interaction data is indicative of human interaction with the computer based on an output of at least one of the first and second classifiers.

According to an aspect of the present invention there is provided a computer-implemented method of detecting a replay of interaction with a computer, comprising receiving event data indicative of interaction events occurring at the computer, extracting a plurality of user-interface, UI, cues from the received event data, wherein each UI cue is indicative of an interaction with respect to the computer, determining for each UI cue a type indicative of the type of interaction with respect to the computer, wherein the type is selected as one of a plurality of predetermined types of interaction, determining a fingerprint identifying the plurality of UI cues, wherein the fingerprint is determined according to a heuristic function applied to a series of count values, each count value being indicative of a number of UI cues of one of the plurality of predetermined types and determining if the interaction with the computer is a replay of previous interaction with the computer based on the fingerprint and one or more fingerprints indicative of previous interaction with the computer. The method may comprise performing an action in dependence on the determination that the interaction with the computer is a replay of previous interaction with the computer.

According to an aspect of the present invention, there is provided a method of detecting a replay of interaction with a computer, comprising receiving event data indicative of interaction events occurring at the computer, extracting one or more user-interface, UI, cues from the received event data, wherein each UI cue is indicative of an interaction with respect to the computer, determining one or more parameters associated with each UI cue, determining a fingerprint identifying a plurality of UI cues, wherein the fingerprint is determined in dependence on the one or more parameters associated with each of the plurality of UI cues, and determining if the interaction with the computer is a replay of previous interaction with the computer based on the fingerprint and one or more fingerprints indicative of previous interaction with the computer. The method may be computer-implemented.

The one or more parameters associated with each UI cue may comprise a type indicative of the type of interaction with respect to the computer.

The fingerprint may be a fingerprint value determined in dependence on values of the one or more parameters associated with each of the plurality of UI cues. The fingerprint value is optionally determined by applying a function to the values of the one or more parameters associated with each of the plurality of UI cues. The function may comprise a heuristic function. The function may be a canonicalization function. The function may comprise a hash function.

The type of each UI cue may be selected from amongst at least some of Mouse Move (MM) indicative of movement of a pointing device, Touch Move (TM) indicative of movement of a cursor responsive to touch applied to a touch sensitive device, Mouse Move and Click (MMC) movement of a pointing device including a control activation, Touch Move and Tap (TMT) indicative of movement of a cursor responsive to touch applied to a touch sensitive device and a control activation, Discrete Click (DC) control activation indicative of activation of a control of a pointing device, but without accompanying movement, Discrete Tap (DT) indicative of activation of a control, but without accompanying touch-induced movement, Key Press (KP) indicative of control activation and release.

The method may comprise performing an action in dependence on the determination that the interaction with the computer is a replay of previous interaction with the computer.

The action may comprise causing the computer to output a request for confirmation that a user of the computer is human. The request for confirmation that a user of the computer is human optionally comprises a Completely Automated Public Turing Test to Tell Computers and Humans Apart (CAPTCHA). The action may comprise reducing a functionality of the computer.

The determining if the interaction with the computer is a replay of previous interaction with the computer optionally comprises comparing the fingerprint against a data store comprising the one or more fingerprints indicative of at least one previous interaction with the computer.

The method may comprise determining whether a predetermined threshold number of comparisons indicate that the fingerprint is present in the data store. The predetermined threshold number of comparisons may be those within a predetermined period of time.

The event data may be indicative of interaction with a user interface of the computer. The event data may be indicative of interaction events occurring with respect to the user interface. The event data may be indicative of interaction of a pointing device with the computer. The interaction of the pointing device optionally comprises one or both of movement of the pointing device or clicking of the pointing device.

The movement of the pointing device may comprise a predetermined length of movement of the pointing device or movement of the pointing device over a predetermined period of time.

The event data may be indicative of interaction with a control of the computer. The control may comprise a keyboard or a displayed control of the computer.

The action comprises permitting access for the user computer to a service. The service may be provided by a software application. The software application is optionally communicable with the user computer in dependence on the determination of whether the interaction with the computer is a replay of previous interaction with the computer. The software application may operably execute on a service computer.

According to an aspect of the present invention, there is provided a computing apparatus, comprising a processor, computer readable memory associated with the processor, the memory storing computer executable instructions which, when executed by the processor, cause the processor to receive event data indicative of interaction events occurring at the computer, extract one or more user-interface, UI, cues from the received event data, wherein each UI cue is indicative of an interaction with respect to the computer, determine one or more parameters associated with each UI cue, determine a fingerprint identifying a plurality of UI cues, wherein the fingerprint is determined in dependence on the one or more parameters associated with each of the plurality of UI cues, and determine if the interaction with the computer is a replay of previous interaction with the computer based on the fingerprint and one or more fingerprints indicative of previous interaction with the computer.

According to an aspect of the present invention, there is provided computer software which, when executed by a computer, cause the computer to perform a method comprising steps of receiving event data indicative of interaction events occurring at the computer, extracting one or more user-interface, UI, cues from the received event data, wherein each UI cue is indicative of an interaction with respect to the computer, determining one or more parameters associated with each UI cue, determining a fingerprint identifying a plurality of UI cues, wherein the fingerprint is determined in dependence on the one or more parameters associated with each of the plurality of UI cues, and determining if the interaction with the computer is a replay of previous interaction with the computer based on the fingerprint and one or more fingerprints indicative of previous interaction with the computer.

According to an aspect of the present invention, there is provided a computer readable medium comprising computer software according to an aspect of the invention. The computer software may be tangibly stored on the computer readable medium. The computer readable medium may be non-transitory.

It will be appreciated that aspects of the above invention may be combined.

Brief Description of the Drawings

Embodiments of the invention will now be described by way of example only, with reference to the accompanying figures, in which:

Figure 1 shows a system according to an embodiment of the invention;

Figure 2 shows a schematic illustration of the system according to an embodiment of the invention;

Figure 3 shows a schematic illustration of the system according to an embodiment of the invention;

Figure 4 shows a method according to an embodiment of the invention;

Figure 5 shows an illustration of pointing device movement and metrics associated therewith according to an embodiment of the invention;

Figure 6 shows cue groups according to an embodiment of the invention;

Figure 7 shows a schematic illustration of a classification component according to an embodiment of the invention;

Figure 8 is an illustration of performance of an embodiment of the invention; and

Figure 9 is a method according to an embodiment of the invention

Detailed Description of Embodiments of the Invention

Embodiments of the invention are provided for identifying human interaction with a computer. Embodiments of the invention will be explained with reference to a distributed computer system i.e. comprising a plurality of computing devices distributed across a computer network. It will however be appreciated that embodiments of the invention may be implemented by a single computer to identify whether interaction with that computer originates from a human.

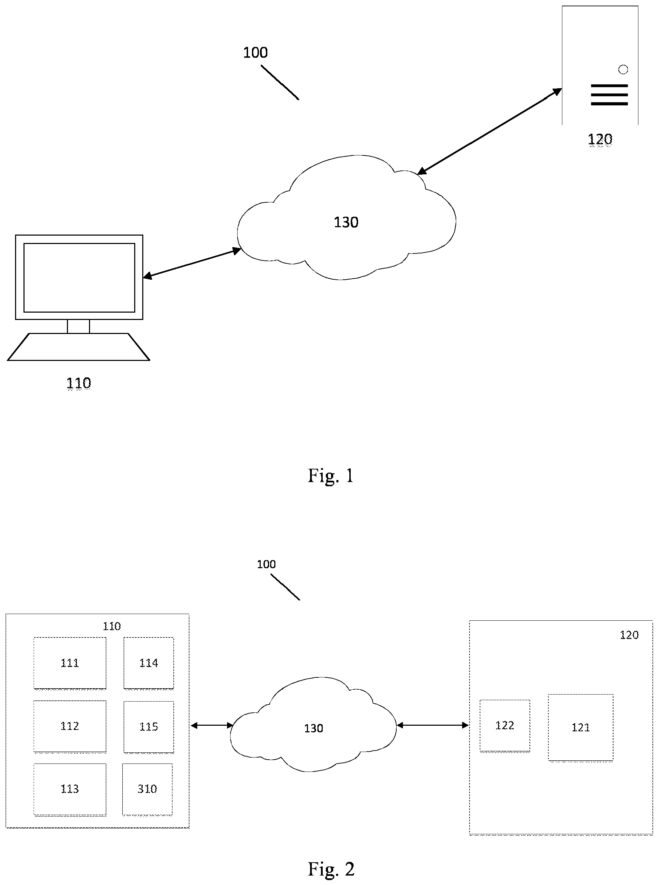

Figure 1 illustrates a system 100 according to an embodiment of the invention. The system 100 comprises a first computer in the form of a user computer 110 and a second computer in the form of a server computer 120. Each of the user computer 110 and server computer 120 may comprise one or more processors arranged to operably execute computer software thereon, where the computer software is stored in a computer-readable medium accessible to the one or more processors. The computer-readable medium may be one or more memory devices, where the memory may also store data for use by the software.

The user computer 110 and server computer 120 are communicably coupled by a computer network 130. The computer network 130 may comprise one or more networks such as Local Area Networks (LANs) and the Internet. The server computer 120 may provide a service to the user computer 110 via the network 130. The service may be provided via one or more web pages where the user computer 110 operably executes software for interpreting web pages, such as a web browser, where the web pages may include mark-up language such as HTML. In other embodiments the user computer 110 may execute a software application which is arranged to communicate with counterpart software executing on the server computer 120. In still other embodiments, the system 100 may comprise a service computer 130 on which one or more software components execute for providing a service to the user computer 110 wherein the server computer 120 permits access for the user computer 110 to the service computer 130.

Referring to Figure 2, which schematically illustrates the system 100 shown in Figure 1, the user computer 110 comprises a user interface 111, 112, 113. The user interface 111, 112, 113 is provided for outputting data to a user of the computer 110 and for receiving an input from the user of the computer 110. The computer 110 may comprise an output device 111 such as a display device 111 for visually outputting data thereon and one or more user input devices 112, 113 which may comprise one or more of a keyboard 112, a pointing device 112, such as a touchpad or mouse, or other user input device 113. In some embodiments, the output device 111 and at least some of the user input devices 112, 113 may be integrated, such as in the form of a touch-screen display device which is capable of visually outputting data and receiving the user's input. As described above, the user computer 110 operably executes software 114 which may be a web-browser 114. The user computer 110 comprises a communication unit 115 which may be a network interface 115 for communicably coupling the user computer 110 to the network 130 for communicating with the server computer 120.

Data may be communicated between the user computer 110 and the server computer 120 in data packets. At least some of the data packets received at the user computer 110 from the server computer 120 provide an indication of data to be displayed on the display device 111 and at least some of the data packets transmitted from the user computer 110 to the server computer 120 provide an indication of a user's input received at the one or more user input devices 112, 113. The data packets communicated from the user computer 110 to the server computer 120 may further comprise one or more of an indication of an identity of the user computer, such as an IP address of the user computer 110, location information associated with the user computer, such as an indication of a country in which the user computer 110 is located, an indication of an operating system (OS) of the user computer 110, a presence of any intermediary computers in a communication path between the user computer 110 and the server computer 120 i.e. proxy servers, an indication of a display screen size of the user computer 110, information associated with the software 114 executing on the user computer 110. For example, the information associated with the software 114 may comprise an indication of a type of the software, such as a type of web-browser being used, an indication of whether the web-browser 114 is configured to download images associated with web pages accessed by the web-browser 114, information about a configuration of the web-browser 114, such as whether the web-browser 114 is configured for JavaScript support. In some embodiments, the data packets provide an indication of whether the software 114 represents a recognised user agent i.e. a user agent which has been previously encountered by the server computer 120. By previously encountered it is meant that the user agent has a history of valid access of the server computer 120. The data packets may provide, in some embodiments, an indication that the user computer 110 stores an indication provided by the server computer 120 that the user computer 110 is reputable. The server computer 120 may provide the indication following the user computer 110 having completed one or more value interactions with the server computer 120. The indication may be a cookie provided by the server computer 120. Other information may also be communicated, as it will be appreciated.

In use, the software 114 executing on the user computer 110 receives data via the communication unit 115 from the server computer 120 and causes data to be visually output on the display device 111 in dependence thereon. An input is received by the software 114 from the user via one or more of the user input devices 112, 113 and data indicative thereof is communicated to the server computer 120 via the communication unit 115 and network 130. The data provided by the server 120 may cause the user computer 110 to display a user interface comprising a form having one or more data entry fields, wherein the user of the user computer 110 may interact with the form via use of the pointing device 112, such as moving about the form, and may enter data into the one or more data entry fields via the keyboard 111. On activation of a control at the user computer 110 data representing the data entered into the form is communicated to the server computer 120.

Operatively executing on the server computer 120 is a server module 121 according to an embodiment of the invention. The server module 121 may be implemented in software or hardware, or a combination thereof. The server module 121 is arranged to receive, via a network interface 122 of the server computer 120 which un use communicably couples the server computer 120 to the network 130, the data indicative of the user operation of the user computer 110 as will be explained.

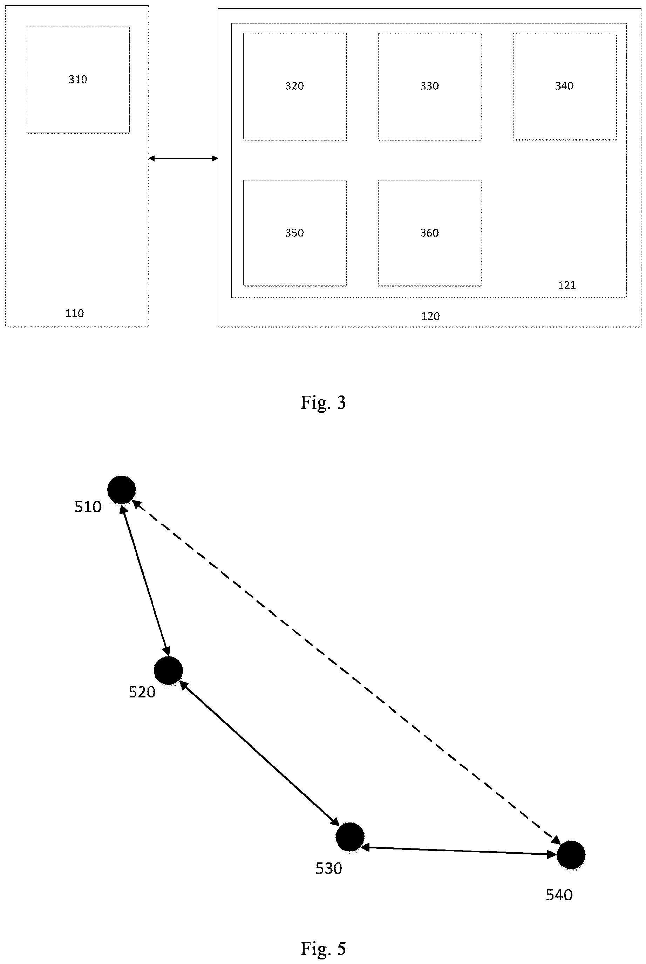

Figure 3 is a further schematic illustration of the system 100 according to an embodiment of the invention. As illustrated in both Figures 2 and 3, the user computer 110 comprises an event logging component 310.

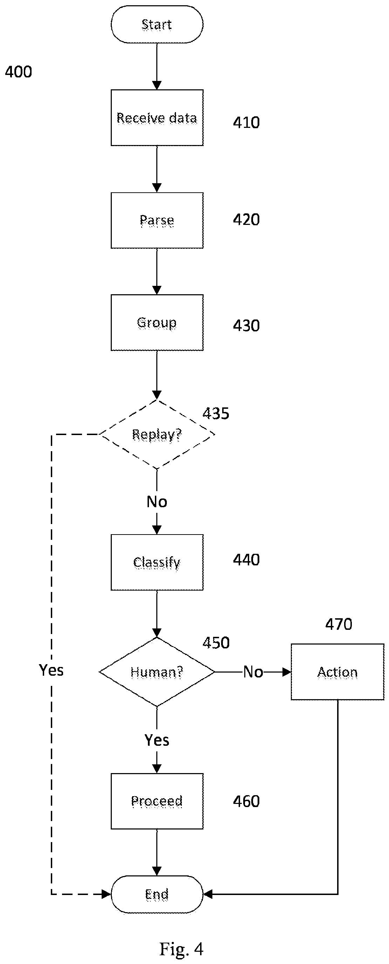

The server module 121 comprises an event parsing component 320, a logging component 330, a classification component 340 and a decision component 350. In some embodiments, the server module 121 comprises a replay protection component 360. Operation of the system illustrated in Figures 1-3 will be described with reference to the method 400 illustrated in Figure 4. Figure 4 illustrates a method 400 of identifying human interaction with a computer. In the context of Figures 1-3, Figure 4 illustrates a method 400 of identifying human interaction with the user computer 110 which is performed by the server computer 120, in particular by the server module 121. It will also be appreciated that the method of Figure 4 may be performed by other systems than those illustrated in Figure 1-3.

The event logging component 310 may be a software module which has been communicated from the server computer 120 to the user computer 110 and operatively executes thereon. The event logging component may, for example, be implemented in Javascript, although it will be appreciated that other languages may be used. The event logging component 310 may be executed by the web browser 114 on the user computer 110, although other arrangements may be envisaged. In some embodiments, the event logging component 310 is provided by electronic circuitry of the user computer 110.

The event logging component 310 is arranged to gather interaction data indicative of interaction with the user computer 110. The interaction data may, in some embodiments, comprise event data indicative of interaction events with respect to the user computer 110. In some embodiments, the event logging component 310 may be arranged to subscribe, capture or listen for a plurality of predetermined events occurring with respect to the user computer 110, such as those described below. The interaction may comprise low-level events occurring with respect to the user interface (UI) of the user computer 110. Thus the event logging component may be arranged to gather event data indicative of UI events at the user computer 110. A UI event may be indicative of operation of a control, such as a key, button (such as of the pointing device 112), or visually displayed control selected by the user. For example, the UI event may be indicative of a key of the keyboard 111, visually displayed representation of the keyboard, or pointing device control, being selected or activated by the user. The UI event may be indicative of movement of the pointing device 112 by the user of the user computer 110. In some embodiments, movement of the pointing device 112, such as the mouse, may occur over a relatively long duration. Therefore, in some embodiments, the movement is divided into movement occurring over a predetermined period of time. The predetermined period of time may be between 0.1 seconds and 1 second. In some embodiments, the predetermined period of time is between 0.3 and 0.5 seconds. It has been found that determining movement of the pointing device 11 over a period of around 0.4 seconds is particularly effective, although other periods of time may be used. Thus the movement of the pointing device 112 is divided by the event logging component 112 into individual units of movement of the pointing device occurring over the predetermined period of time. The movement of the pointing device may be stored as event data indicative of a path followed by the pointing device during the predetermined period of time.

In some embodiments, the event logging component 310 may determine a time at which each event occurs. Thus each event may be associated with time information in some embodiments. The event logging component 310 may temporarily store event data indicative of the events occurring with respect to the user computer 110. The event data may be stored in a queue, such as in a memory of the user computer 110. The event data is indicative of each low-level user interaction with the user computer 110 and, in particular, the user interface 111, 112, 113, thereof. In some embodiments, the event data does not comprise key values indicating which keyboard keys have been activated by the user, such that the event logging component 310 does not provide a security risk. The event data is communicated from the event logging component 310 to the server computer 120. The event data may be communicated over a secure channel which may be provided by, for example, SSL or TLS, as will be appreciated. The event data may be periodically communicated from the user computer 110 to the server computer 120. For example, the content of the queue may be transmitted from the user computer 110 to the server computer 120 at predetermined intervals of time. The predetermined intervals of time may be selected as desired, however, it has been found that around 1 second is useful. Thus in some embodiments, event data indicative of one or more user interface events occurring with respect to the user computer 110 are communicated from the user computer 110 to the server computer 120 at each predetermined time interval.

The event data is received at the server computer 120 by the server module 121. The event data may be received at the server computer 120 in step 410 of the method illustrated in Figure 4. The received event data may be stored in a memory of the server computer 120 for processing by the server computer 120.

In some embodiments, the event parsing component 320 of the server module 121 receives the event data. The event parsing component 320 is arranged to process or parse the received event data as in step 420 of the method 400 illustrated in Figure 4. The event parsing component 320 is arranged to combine event data from related interactions with the user computer 110. In some embodiments, the parsing component 320 may process the event data to normalise event data. The normalisation may be performed in order to account for variation between the ways in which different user computers, such as user computers running different operating systems for example, generate the event data as will be explained.

The event data for a plurality of related UI events at the user computer 110 is combined to form a user-interface (UI) cue. A UI cue is indicative of a higher-level interaction with the user interface of the user computer 110, relative to the event data. The UI cue is intended to represent a single user-interaction with the user interface of the user computer 110. The single user interaction may be, for example, a single control activation or key press at the user computer 110. Formation of each UI cue from the event data is useful since the received event data is noisy being indicative of low-level event at the user computer 110.

Each UI cue may have an associated type indicative of the type of interaction with the user computer 110. That is, each UI cue may be one of a plurality of predetermined types representative of respective interaction with the user computer 110. For example, the type may indicate that the UI cue is indicative of operation of a key of the keyboard of the user computer 110, or movement of the pointing device 110 of the user computer 110. It will be appreciated that other types of UI cue may be envisaged. In some embodiments, the UI cue may be selected from amongst at least some of the following predetermined types of UI cue:

Mouse Move (MM) indicative of movement of a pointing device 112, Touch Move (TM) indicative of movement of a cursor responsive to touch applied to a touch sensitive device, Mouse Move and Click (MMC) movement of a pointing device 112 including a control activation such as a 'click', Touch Move and Tap indicative of movement of a cursor responsive to touch applied to a touch sensitive device and a control activation (TMT), Discrete Click (DC) control activation indicative of activation of a control of a pointing device, but without accompanying movement, Discrete Tap (DT) indicative of activation of a control, but without accompanying touch-induced movement, Key Press (KP) indicative of control activation and release, such as a press and release, of a keyboard key, and Page Load (PL) indicative of loading of a page such as a webpage, which may be used a synchronisation event. As noted above, each UI event may be indicative of movement or control activation within a predetermined period of time, such as 0.4s.

Each UI cue may adopt a timestamp value corresponding to a time associated with a first UI event forming the UI cue.

For example, first event data received by the event parsing component 320 indicative of a key being depressed by the user may be combined with second event data indicative of the key being released by the user to form a UI cue. In embodiments where the event data comprises an indication of the time at which each event occurs, the event parsing component 320 may determine temporal aspects of the combined events for the UI cue, such as a duration for which the key or control is held by the user based on a difference in time between the first and second events in the example.

A UI cue may be indicative of movement or pointing by the pointing device 112, a keystroke or pointing and operation of a control of the pointing device 112, sometimes referred to as "pointing and clicking" at the user computer 110. Once each UI cue has been determined by the event parsing component 320, one or more properties of the UI cue may be determined. The determination of one or more properties of each UI cue may be performed in step 420 of Figure 4.

Table 1 below provides a plurality of example properties which may be determined for each UI cue. A name of each property is indicated in a left-hand column of the table below. Some properties are only applicable to pointing device movements, whilst some properties are applicable to both pointing device movements and keystrokes (which may be performed with respect to a physical or displayed keyboard or keypad), as indicated by a middle column of the table below. A description of each property is provided by the right-hand column. In one embodiment, the event parsing component 320 is arranged to determine each of the properties listed in the table below for each UI cue. However, it will be appreciated that in other embodiments only some of the properties identified in the table below may be determined and that, in other embodiments, other properties may be determined.

**Table 1**

| Property Name | Applicability | Description |
|---|---|---|
| **Duration** | Pointing & keystrokes | Duration of cue i.e. continuous movement time of pointing device or hold time for key. |
| **Distance** | Pointing | Total distance of movement for duration of cue. |
| **Displacement** | Pointing | Direct (straight-line) movement distance between start and end of cue. |
| **Displacement Angle** | Pointing | Angle of pointing device displacement relative to a reference. The reference may be a vertically-oriented reference. |
| Average Speed | Pointing | Average speed of pointing device movement for duration of cue. |
| Move Efficiency | Pointing | Efficiency of movement of pointing device e.g. efficiency=distance/displacement. |
| **Control Value** | Pointing device control value (e.g. left/middle/right). Wildcard for keystrokes | Which control or key of user interface activated. For security, key code values may not be transmitted. |
| **Timing Entropy** | Calculated entropy value | Entropy of event timing |

Further explanation of distance, displacement and move efficiency properties will be provided with reference to Figure 5. Figure 5 illustrates a movement path of the pointing device 112 for a UI cue. The path of the pointing device is indicated with solid lines between four coordinates indicated with reference numerals 510-540. It has been noted that human movement of a pointing device is different to software-controlled movement, such as by a bot. Humans, it has been observed, do not move the pointing device 112 in a straight line between an origin and a destination. Human-controlled movement is instead likely to be via one or more intermediate locations not lying along a direct path between the origin and destination, as illustrated. The distance (*dist*) property is a total distance of paths between locations 510-520, 520-530, 530-540. The displacement (*disp*) is the straight line distance between the origin and destination locations 510-540 as indicated by the dotted line in Figure 5. The movement efficiency (*ME*) may be calculated as:

$$ME = \frac{disp}{dist}$$

A ME of 1 is indicative of straight line movement between the origin and destination locations 510, 540. More curved or indirect movement results in a lower ME value for the UI cue. A higher ME value is likely to be indicative of software-controlled movement of the pointing device rather than human-controlled movement.

Where the UI cue is a keystroke, for properties only applicable to pointing device movement may be determined to be a default value. The default value may be a predetermined value. In some embodiments, the default value is a value which is unlikely to occur in operation of the user computer 110, such as a negative value which may be, for example, -1. It will be appreciated that other default values may be used.

The timing entropy is a value calculated indicative of temporal uniformity of a plurality of cues. The timing entropy is indicative of the temporal uniformity of the time at which each interaction with the user computer 110 occurs. A greater regularity of interaction with the user computer 110 may be indicative of software-controlled interaction, whereas more irregular interaction may be indicative of human interaction with the user computer 110. The timing entropy value may be calculated using a sample entropy method, as will be appreciated. A constant value r may be determined empirically. In some embodiments, the timing entropy value is calculated across each of a plurality of cues within a cue group, as will be explained below.

Thus, in some embodiments of step 420, the event parsing component 320 is arranged to determine a plurality of property values for each UI cue. For the example table above, each UI cue is associated with eight property values, although it will be realised that other numbers of properties may be determined for each UI cue as noted above.

As noted above, in some embodiments first event data may be indicative of a key press (key-down) event and second event may indicative of a key release (key-up) event. These may be referred to as keystroke events. However, it has been observed that some touch-based user computers raise keystroke events in a different manner to other touch-based user computers.

Most user computers generate an event to denote that a character, or other visual control, on an on-screen keyboard has been pushed (key-down) immediately when the action is performed by the user. The user computer then raise then another event when the character is released (key-up). This allows the timing of the keypress to be measured, i.e. from press to release. It has been noted that some user computers defer the raising of the initial key-down event until the key is released, at which point both key-down and key-up events are raised. In this situation it is not possible to measure the exact time that the character was held on the on-screen keyboard (key-hold duration).

Some embodiments, of the invention are arranged to infer or estimate an inter-key-press time or duration. The inter-key-press time is understood to be the time between the press of a character (or other control) and the press of the next character during the user's entry of information via the keyboard (or other displayed interface), to approximate the key-hold duration. In this way, the data from various user computer is normalised, such that those that behave differently to the majority of touch devices are comparable. Advantageously, when one or more classifiers are trained, as explained below, differences between human and software-controlled or bot data are focussed upon, rather than noise generated due to differences in the type of touch device used when the data was generated. The overall result is a classifier which is specific, or accurate, in its classification.

In some embodiments, the normalisation is performed by the event parsing component 320 during step 420 of the method 400. The normalisation may comprise (1) if a touch class event is detected during the parsing of the received event data, a first flag is set to true to denote an existence of evidence that the user computer is being interacted with via a touch screen (as opposed to physical keyboard and or mouse, for example). (2) Check the timing of all key-down and key-up events and if the duration between any key-down and corresponding key-up event is less than a threshold (6ms in some embodiments, although other threshold durations may be used). In this case a second flag is set to true. This second flag denotes that there is keystroke data whose timing may need to be modified. (3) If both the first and second flags are set to true, the creation of high-level keypress cues is performed based on the time between the key-down and next key-down events in the interaction data, divided by a constant value, which may be determined empirically. In some embodiments, the constant value is 3.01, although it will be appreciated that other values may be used. (4) In the case where zero, or one of the first and second flags is set to true, the high-level keypress cues are generated from the duration between the key-down and corresponding key-up events.

The logging component 330 is arranged, in step 430, to group a plurality of UI cues as a cue group. A cue group is a plurality of associated UI cues. The UI cues may be sequentially determined cues. The cue group provides a further, higher-level, representation of the interaction with the user computer 110. Each cue group is intended to represent a segment or portion of the user's behaviour whilst interacting with the user computer 110 and, for example a web-page or form provided by the user computer 110. A number of UI cues which are grouped to form each cue group may be selected to be appropriate for the expected interaction with the user computer. However, it has been found that between two and six UI cues provides an effective representation of interaction with the user computer 110. In particular, in some embodiments four UI cues may be grouped to form each cue group. The logging component 330 is arranged to associate the plurality of UI cues forming each cue group, and to store the cue groups in a data store representing the interaction with the user computer 110. The data store may be referred to as a user log. In some embodiments, each of the plurality of UI cues forming a cue group are associated with a cue group ID value identifying the cue group. Grouping UI cues in this way may further reduce noise in the data received from the user computer 110.

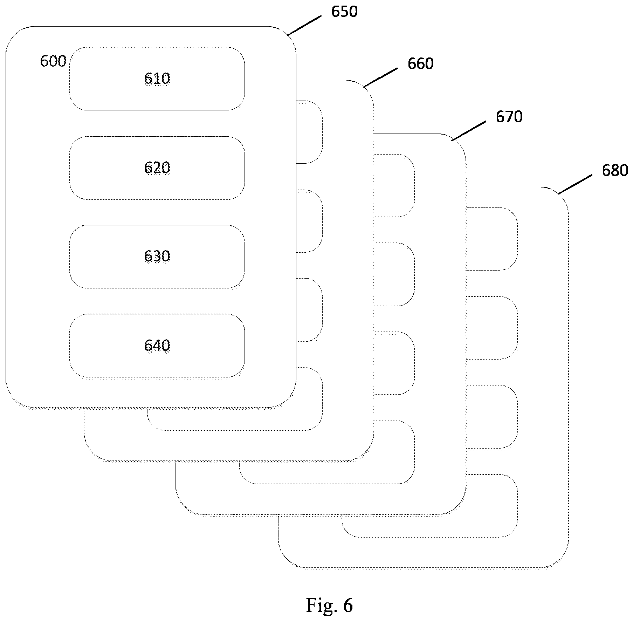

Figure 6 illustrates a cue group 600 comprising four UI cues 610, 620, 630, 640 each UI cue being indicative of interaction with the user computer 110 as explained above. Furthermore, each UI cue is associated with a plurality of properties determined for the UI cue as described above in relation to step 420. Thus, in one embodiment, for a cue group 600 comprising four UI cues 610, 620, 630, 640 wherein each UI cue 610, 620, 630, 640 is associated with eight property values, the cue group 600 is associated with thirty two property values in total. Steps 410-430 may be continuously performed during interaction with the user computer 110 such that the user log is populated with a plurality of cue groups. Figure 6 illustrates four cue groups 650, 660, 670, 680. It will be appreciated that the user log is not restricted to comprising or storing four cue groups.

In some embodiments comprising the replay protection component 360, the method comprises an optional step 435 (as indicated by dashing in Figure 4) of determining whether the interaction is a replay of previous interaction with the user computer 110.

In particular, in embodiments of the invention, the replay protection component 360 is arranged to perform the determination based upon one or more cue groups 650, 660, 670, 680. In some embodiments the replay protection component 360 is arranged to perform the determination in dependence on a plurality of cue groups 650, 660, 670, 680, such as three or more cue groups 650, 660, 670, 680. It has been ascertained by the present inventor that in some embodiments using four cue groups 650, 660, 670, 680, wherein each cue group comprises around four UI cues 610, 620, 630, 640 and associated properties is particularly advantageous. The use of said number of cue groups and UI cues provides improved accuracy in the determination of replay of interaction with the user computer 110.

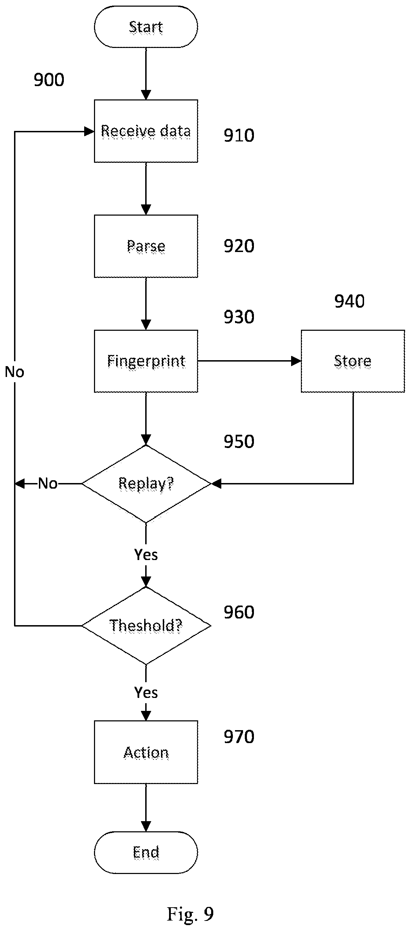

The replay protection component 360 may operatively determine that the interaction with the user computer 110 is a replay of previous interaction as described below with reference to Figure 9.

If it is determined in step 435 that the interaction is a replay of previous interaction, then the method ends as the interaction with the user computer is determined to be non-genuine, such as resulting from software-controlled interaction. In some embodiments the replay protection component 360 may add identification information of the user computer 110 to a data store such as a blacklist if it is determined that the interaction is a replay of previous interaction. The replay protection component 360 may block access for the user computer 110 to the software application or to the service computer 130 in response to determining that the interaction is a replay.

As a result of step 360, an action is performed in dependence on the determination that the interaction with the user computer 110 is a replay, or not, of previous interaction with the computer. The action may comprise permitting access for the user computer 110, or a software component executing thereon, to a service. The service may be that provided by a remote software application. The remote software application is permitted to communicate with the user computer 110 or permitted to provide the service to the user computer in dependence on the determination of whether the interaction with the user computer 110 is a replay of previous interaction with the computer. In particular, if it is determined that the interaction with the user computer 110 is not a replay of previous interaction with the user computer 110, then remote software application is permitted to communicate with the user computer 110 or permitted to provide the service to the user computer 110 as in step 460 described below. In some embodiments, one or more further steps may be taken before the action is performed, as explained below.

The classification component 340 is arranged, in step 440 of the method 400, to determine whether the interaction with the user computer 110 is indicative of human interaction. In some embodiments, the classification component 340 is arranged to determine whether the interaction is one of random, or directed input where the direction may be software-controlled i.e. bot, or human interaction with the user computer 110. The classification component 340 may perform the determination in dependence on a plurality of UI cues. In some embodiments, the classification component 340 may classify the interaction with the user computer 110 based on one cue group 600 which, as noted above, in some embodiments comprises four UI cues 610, 620, 630, 640. In some embodiments, the classification component 340 is arranged to receive the parameters associated with each of the plurality of UI cues 610, 620, 630, 640 forming the cue group 600. The classification component classifies, in step 440, the interaction with the user computer 110 based on the parameters associated with the plurality of UI cues 610, 620, 630, 640. In some embodiments, where each UI cue 610, 620, 630, 640 is associated with eight parameters, the classification component 340 is arranged to perform the determination upon thirty-two parameter values.

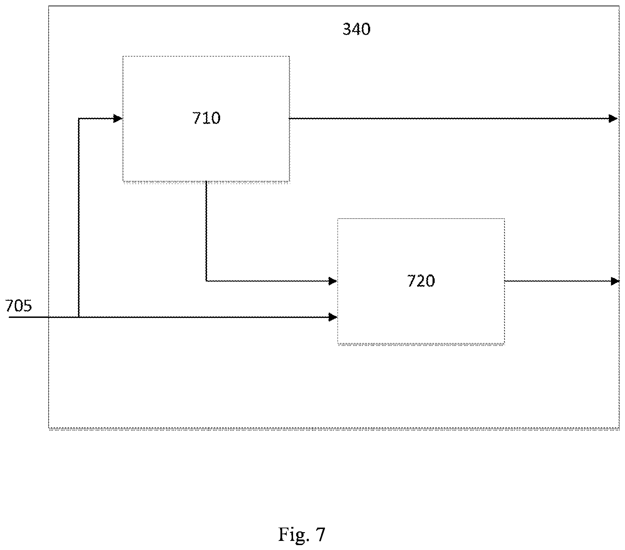

An embodiment of the classification component 340 is illustrated in Figure 7. As illustrated, the classification component 340 comprises a first classifier 710 and a second classifier 720. One or both of the first and second classifiers 710, 720 are decision tree classifiers. In some embodiments, both of the first and second classifiers 710, 720 are decision tree classifiers. The first and second classifiers 710, 720 may be determined based upon a machine learning algorithm which is provided with suitable training data. In some embodiments the first and second classifiers 710, 720 are based upon the C4.5 algorithm for generating a decision tree by Ross Quinlan, as the skilled person will appreciate, although it will be noted that other algorithms may be used, such as C5.0, ID3, support vector machine (SVM), random forest, and others. The C4.5 algorithm builds a decision tree based upon training data.

The second classifier 720 comprises a decision tree which is generated based upon first and second sets of training data, where the first set of training data is indicative of human interaction with a computer and the second set of training data is indicative of software-controlled i.e. bot interaction with the computer. Thus the second classifier 720 is generated to be able to distinguish between human and bot interaction with the computer. The first classifier 710 comprises a decision tree which is generated based upon a third set of training data relating to relating to random interaction with a computer i.e. noise, and a combined set of training data comprising the first and second sets of training data referred to above. Thus the first classifier 710 is generated to be able to distinguish between random interaction with the computer and directed interaction, where the direction is provided by either the human or the bot. In some embodiments, random interaction is understood to comprise a series of random interactions with the computer which lack direction i.e. each input is random. The series of interactions may lack direction between each of the plurality of inputs i.e. each input is random and unconnected to adjacent inputs, which may be unlike directed interaction. Such random inputs may be distinguished from noise in some embodiments where noise is expected to have a relatively low magnitude i.e. noise applied to an input is a relatively small part of a larger input, whereas a random input may have a large magnitude, such as length of mouse movement, but be undirected.

In use, an input 705 is provided to the classification component 340. The input comprises the plurality of parameters associated with the UI cues on which the determination is based. In some embodiments, the input may comprise the thirty-two parameter values as described above. Thus the classification component 340 in some embodiments may considered to have thirty-two inputs which each receive a respective parameter value, wherein the inputs are provided to each of the first and second classifiers 710, 720 in step 440 of the method 400.

In operation, the first classifier 710 is arranged to, firstly, determine whether the input corresponds to random inputs (noise) or directed input. The random inputs may be generated by, for example, a user randomly interacting with the user interface and logging interaction data arising there-from, or by generating random interaction data. The first classifier 710 provides an output value indicative of whether the cue group 600 is indicative of random input or directed input. An output of the first classifier 710 is provided to the decision component 350. The output of the first classifier 710 is also provided to the second classifier 720. If the output of the first classifier 710 is indicative of the input corresponding to random interaction with the computer, then the decision component 350 makes a determination that the cue group 600 does not correspond to human interaction with the user computer 110. The output of the first classifier 710 being indicative otherwise, i.e. that the input corresponds to directed input, causes the second classifier 720 to perform a classification. That is, the second classifier 720 may not make a determination regarding the input until the first classifier 710 has performed its respective classification. The second classifier 720 determines whether the input i.e. cue group 600 in some embodiments, is indicative of bot interaction or human interaction with the computer. An output of the second classifier 720 is provided to the decision component 350. The output of the second classifier 720 is indicative of the input corresponding to bot interaction or human interaction with the user computer 110.

In some embodiments, the classification component 340 performs said classification for each cue group 600, in turn, and provides an output to the decision component 350. The output of the classification component 340 provided to the decision component may comprise an output of the first and second classifiers 710, 720. The decision component 350 may, in some embodiments, perform a decision as to the interaction with the user computer 110 based on the output of the classification component 350 for one cue group 600. However, in other embodiments, the decision component 350 may receive outputs from the classification component 340 corresponding to a plurality of cue groups 650, 660, 670, 680.

In some embodiments, the decision component 350 is arranged receive outputs from the classification component 340 corresponding to four cue groups 650, 660, 670, 680. The outputs from the classification component 340 may be received in turn i.e. sequentially corresponding to classification of the four cue groups 650, 660, 670, 680. Thus the decision component 350 may store the outputs of the classification component until a decision is made. In other embodiments, a plurality of classification components 340 may be provided which each provide an output corresponding to a respective cue group in parallel.

In some embodiments, the decision component 350 is arranged to make a decision based on the output of the classification component 340, wherein the decision may be taken in dependence on a plurality of input cue groups 650, 660, 670, 680. In some embodiments, the decision is based on a majority of the plurality of cue groups 650, 660, 670, 680. In other words, the decision is based upon whether the majority of the plurality of input cue groups 650, 660, 670, 680 are indicative of human or bot interaction with the computer. The determination of the majority may be based upon a ratio of decisions corresponding to bot interaction or human interaction. The ratio may be compared against a predetermined decision threshold value, which may be 0.5 in some embodiments corresponding to the majority decisions although other values of decision threshold may be used to, for example, require greater confidence that the interaction is bot interaction.

In some embodiments, the decision component 350 is arranged to receive further information associated with the user computer 110 and to determine the decision as to the interaction with the user computer 110 based upon the output of the classification component 340 and the further information. In some embodiments, the output of the classification component may be weighted with a weighting also being applied to the further information in the decision. The weighting may indicate, in some embodiments, that the output of the classification component 340 may have a greater weight than the further information.

The decision of the decision component 350 corresponds to step 450 of the method 400 illustrated in Figure 4. Here the decision component 450 determines whether the interaction with the user computer 110 corresponds to human interaction. If said interaction is determined to correspond to human interaction, then the method 400 allows the interaction to proceed i.e. to continue in step 460. If, however, the interaction is determined not to correspond to human interaction, then the method 400 moves to step 470 wherein appropriate action is taken. The action may involve reducing or limiting functionality of the user computer 110 in some embodiments. Said action may comprise the server computer 120 providing a signal to the user computer 110 to trigger the reduction or limiting of functionality. In other embodiments, the user computer 110 may be caused to display a CAPTCHA test in step 470 to verify whether the user computer 110 is being operated by a human.

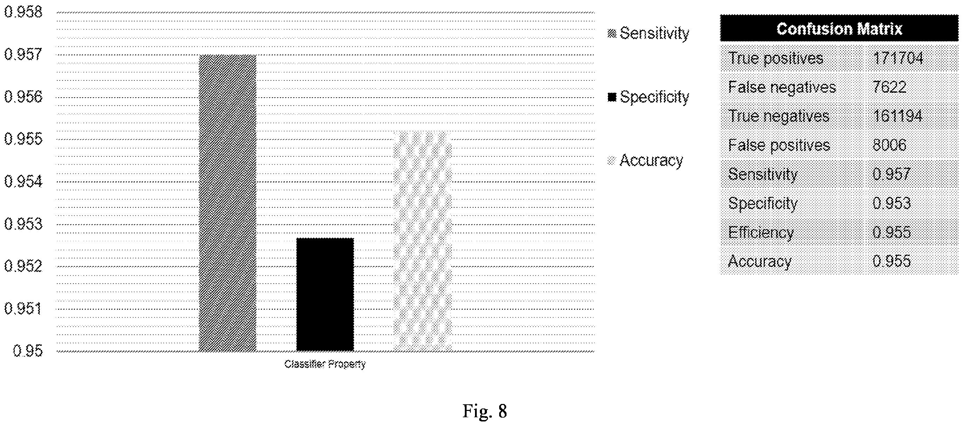

Figure 8 illustrates performance of an embodiment of the invention. As can be appreciated, embodiments of the invention achieve an accuracy of over 95% in identifying human interaction with a computer. The performance values indicated in Figure 8 are based upon cross-validation of the determination of the classification component 340 against validation data. Specificity (also called the true negative rate) measures the proportion of negatives that are correctly identified as such. Sensitivity (which may be called a true positive rate) measures the proportion of positives that are correctly identified as such.

Figure 9 illustrates a method 900 of detecting a replay of interaction with a computer according to an embodiment of the invention. The method 900 may be used in the system illustrated in Figures 1-3 and described above. As noted above, some embodiments of the method illustrated in Figure 4 comprise a step 435 of determining whether a replay of interaction has occurred. Thus, in some embodiments, step 435 of the method 400 illustrated in Figure 4 is represented by the method 900 illustrated in Figure 9. However, it will also be appreciated that the method 900 illustrated in Figure 9 may be used independently to detect the replay of interaction with the computer.

The method 900 is useful to detect software-controlled replays of interaction with a computer, such as the user computer 110 of Figure 1. The method 900 may be performed by the server computer 120. It is understood that a replay of interaction is intended to mean interaction with the computer which is a repeat of previous interaction with the computer. For example, where software is used to control the computer, such as providing a series of inputs to a user interface (UI) of the computer which have previously been provided to the UI of the computer. In this way, the software, such as a so-called bot, may repeatedly perform a process on the computer.

The method 900 comprises steps of receiving data 910 and parsing 920 the received data, as illustrated in Figure 9. These step 910, 920 may be as described above with reference to steps 410, 420 of Figure 4. Thus repeat description of these steps is omitted for clarity. Furthermore, although not illustrated in Figure 9, the method 900 may comprise a step of forming one or more groups as in step 430 of the method 400 illustrated in Figure 4. As a result of steps 910, 920 a plurality of UI cues 610, 620, 630, 640 are stored in a data store accessible to the method 900. The data store may be the user log described above. In some embodiments, the UI cues 610, 620, 630, 640 may be arranged into one or more cue groups 650, 660, 670, 680 although this is not required for the method 900 illustrated in Figure 9.

The method 900 comprises a step 930 of determining a fingerprint for a plurality of UI cues in the data store. The plurality of UI cues 610, 620, 630, 640 may be a plurality of UI cues selected to correspond to interaction with the user computer 110 over a predetermined period of time. The predetermined period of time may comprise a sliding window of predetermined duration. By sliding window it is meant that all UI cues 610, 620, 630, 640 from within a predetermined period of time prior to the current time are selected. In some embodiments, the UI cues 610, 620, 630, 640 may be all of the UI cues 610, 620, 630, 640 stored in the data store, such as the user log.

The fingerprint is indicative of the plurality of UI cues 610, 620, 630, 640. The fingerprint is an identifier for the plurality of UI cues 610, 620, 630, 640. The fingerprint is intended to be unique for the plurality of UI cues 610, 620, 630, 640, such that, should the plurality of UI cues 610, 620, 630, 640 be repeated, then the fingerprint will also repeat to enable detection. The fingerprint may be determined based on one or more attributes of each of the plurality of UI cues 610, 620, 630, 640.

In one embodiment, the fingerprint is based on a type of each of the plurality of UI cues 610, 620, 630, 640, as described above. In some embodiments, a number of UI cues 610, 620, 630, 640 of each type in the plurality of UI cues 610, 620, 630, 640 is determined. For example, the number of UI cues of each of first and second, and possibly further, types in the user log may be determined in some embodiments of step 930. The fingerprint may be determined in step 930 by application of a fingerprint algorithm.

In fingerprint (fp) may be determined as:

$$fp = hash(concatenate(foreach(type\ in\ cueTypes(count(type)))))$$

where *type* is a type of each UI cue, *cueTypes* is a library defining the plurality of types of cue, where *foreach* repeats for each of the plurality of types. The series of count values, each corresponding to the number of UI cues 610, 620, 630, 640, is concatenated to form a string of values which is provided to a function *hash* which generates the fingerprint value *fp*. The function may comprise a heuristic function. That is, the portion *concatenate(foreach(type in cueTypes(count(type))))* represents a summary of the interaction with the computer which is heuristic i.e. includes a level of 'fuzziness' by generalising over the UI cues. In some embodiments, the summary is a string of values representing a magnitude or number of UI cues of each type. The hash function, or other canonicalization function, then serves to reduce the string in length to a unique value. It will be appreciated that the fingerprint value may be determined in other ways based on other attributes of the UI cues 610, 620, 630, 640, such as at least some of the properties described above with reference to Table 1.

Once generated, the fingerprint is stored in step 940. The fingerprint may be stored in a memory or other data storage device accessible to the server computer 120 in step 940.

In step 950 it is determined whether the fingerprint is already present in the data store. That is, it is determined in step 950 whether the fingerprint has been previously encountered. Step 950 may comprise comparing the fingerprint value determined in step 930 against the data store of fingerprint values. It will be appreciated that should the current fingerprint value have been inserted in the data store in step 940 this is excluded from the comparison. If the comparison is positive i.e. that the fingerprint value determined in step 930 is present in the data store, then the method 900 moves to step 960. If, however, the comparison is negative, that the fingerprint has not been encountered previously, then the method 900 returns to step 910.

In some embodiments of the method 900, step 960 comprises determining if a threshold has been reached. The threshold may be a predetermined number of times for which the fingerprint may be encountered before a determination is made that the interaction with the computer is a replay of previous interaction with the computer. The threshold may be a value such as 5, 10 or 20, although other values may be chosen. If the threshold is not reached in step 960 then the method returns to a previous step, such as step 910 as illustrated. Step 960 may comprise incrementing a counter indicative of a number of times for which the determination in step 950 is positive. The counter may be periodically reset, such as reset every predetermined period of time. If, however, the threshold is reached in step 960 then the method moves to step 970.

Step 970 may be equivalent to step 470 of the method 400 illustrated in Figure 4. In step 970 appropriate action is taken responsive to the determination that the interaction with the computer may be software-controlled interaction, particularly a replay of previous interaction with the computer. The action may involve reducing or limiting functionality of the user computer 110 in some embodiments. Said action may comprise the server computer 120 providing a signal to the user computer 110 to trigger the reduction or limiting of functionality. In other embodiments, the user computer 110 may be caused to display a CAPTCHA test in step 970 to verify whether the user computer 110 is being operated by a human.

As a result of the method 900 described above according to an embodiment of the invention, a detection of software controlled interaction with the computer, such as the user computer 110, may be made and appropriate action taken responsive thereto.

It will be appreciated that embodiments of the present invention can be realised in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as claimed in any preceding claim and a machine readable storage storing such a program. Still further, embodiments of the present invention may be conveyed electronically via any medium such as a communication signal carried over a wired or wireless connection and embodiments suitably encompass the same.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed. The claims should not be construed to cover merely the foregoing embodiments, but also any embodiments which fall within the scope of the claims.

**Claims**

1. A computer-implemented method of identifying human interaction with a computer, comprising:

   receiving (410) interaction data indicative of interaction with the computer, wherein the interaction data comprises event data indicative of interaction events with a user-interface, UI, provided by the computer and wherein the event data is indicative of one or more of movement of a pointing device, movement of a cursor responsive to touch applied to a touch sensitive device, activation of a control of the UI and operation of a keyboard associated with the computer;
   determining (420) one or more UI cues from the interaction data;
   determining, (440) at a first classifier, (710) whether the interaction data is indicative of directed or random interaction with the computer in dependence on a plurality of the UI cues;
   providing an output of the first classifier to a second classifier;
   determining, (440) at the second classifier, (720) whether the interaction data is indicative of human or software-controlled interaction with the computer, in dependence on the plurality of the UI cues and the output of the first classifier;
   wherein the second classifier is a machine-learning based classifier trained based upon a first set of training data indicative of human interaction and a second set of training data indicative of software-controlled interaction, and the first classifier is a machine-learning based classifier trained based upon a third set of training data indicative of random interaction and a combined set of training data comprising the first and second sets of training data;
   determining (450) whether the interaction data is indicative of human interaction with the computer based on both the output of the first classifier and an output of the second classifier; and
   performing an action (460, 470) in dependence on the determination of whether the interaction data is indicative of human interaction with the computer.

2. The method of claim 1, comprising providing the output from the first classifier to the second classifier of the interaction data being indicative of directed interaction with the computer.

3. The method of claim 2, wherein the interaction data is determined to be indicative of illegitimate interaction with the computer based on an output of only the first classifier, wherein the illegitimate interaction comprises the software-controlled interaction or the random interaction.

4. The method of any preceding claim, wherein the directed interaction is directed by one of a human or software-controlled interaction.

5. The method of any preceding claim, wherein each of the one or more UI cues is indicative of an interaction with the computer, and optionally wherein the UI cue is indicative of at least one of: a keystroke received at the computer, or one or both of movement of the pointing device or clicking of the pointing device.

6. The method of claim 5, wherein, when the UI cue is indicative of movement of the pointing device, the UI cue is indicative of a predetermined duration of movement of the pointing device.

7. The method of claim 5 or 6, comprising determining one or more parameters of the UI cue, and optionally wherein the one or more parameters comprise a duration of the UI cue.

8. The method of claim 7, wherein the one or more parameters comprise a distance of the movement of the pointing device, a displacement of the movement of the pointing device, an average speed of the movement of the pointing device and a displacement angle of the movement of the pointing device.

9. The method of claim 5 or 6, wherein the one or more parameters comprise a movement efficiency of the pointing device, wherein the movement efficiency is determined based on a distance and displacement of the movement of the pointing device.

10. The method of any of any preceding claim, wherein the first and second classifiers are arranged to determine whether the interaction data is indicative of human interaction with the computer based on one or more UI cues.

11. The method of claim 10 when dependent upon any of claims 7 to 9 or any claim dependent thereon, wherein the first and second classifiers are arranged to determine whether the interaction data is indicative of human interaction with the computer based on the one or more parameters associated with one or more UI cues.

12. The method of any preceding claim, wherein at least one of: one or both of the first and second classifiers are decision tree classifiers or the action comprises permitting access for the user computer to a service.

13. The method of claim 12, wherein the service is provided by a software application, wherein the software application is communicable with the user computer in dependence on the determination of whether the interaction with the computer is a replay of previous interaction with the computer, and optionally wherein the software application operably executes on a service computer.

14. A computing apparatus, comprising:

a processor;
computer readable memory associated with the processor, the memory storing computer executable instructions which, when executed by the processor, cause the processor to:

receive interaction data indicative of interaction with the computer, wherein the interaction data comprises event data indicative of interaction events with a user-interface, UI, provided by the computer and wherein the event data is indicative of one or more of movement of a pointing device, movement of a cursor responsive to touch applied to a touch sensitive device, activation of a control of the UI and operation of a keyboard associated with the computer;
determine one or more UI cues from the interaction data;
determine, at a first classifier, whether the interaction data is indicative of directed or random interaction with the computer in dependence on a plurality of the UI cues;
provide an output of the first classifier to a second classifier;
determine, at the second classifier, whether the interaction data is indicative of human or software-controlled interaction with the computer, in dependence on the plurality of the UI cues and the output of the first classifier;
wherein the second classifier is a machine-learning based classifier trained based upon a first set of training data indicative of human interaction and a second set of training data indicative of software-controlled interaction, and the first classifier is a machine-learning based classifier trained based upon a third set of training data indicative of random interaction and a combined set of training data comprising the first and second sets of training data;
determine whether the interaction data is indicative of human interaction with the computer based on both the output of the first classifier and an output of the second classifier; and
perform an action in dependence on the determination of whether the interaction data is indicative of human interaction with the computer.

15. A computer system comprising:

a user computer;
the computing apparatus of claim 14 arranged to receive event data from the user computer; and
a service computer for providing a service to the user computer;
wherein the computing apparatus is arranged to permit the service computer to provide the service to the user computer in dependence on whether the interaction data is indicative of human interaction with the computer.

16. The computer system of claim 15, wherein the service computer comprises a software application operably executing on one or more processors of the service computer, wherein the software application communicates with the user computer to provide the service to the user computer.

17. Computer software which, when executed by a computer, cause the computer to perform a method comprising steps of:

receiving interaction data indicative of interaction with the computer, wherein the interaction data comprises event data indicative of interaction events with a user-interface, UI, provided by the computer and wherein the event data is indicative of one or more of movement of a pointing device, movement of a cursor responsive to touch applied to a touch sensitive device, activation of a control of the UI and operation of a keyboard associated with the computer;

determining one or more UI cues from the interaction data;

determining, at a first classifier, whether the interaction data is indicative of directed or random interaction with the computer in dependence on a plurality of the UI cues;

providing an output of the first classifier to a second classifier;

determining, at the second classifier, whether the interaction data is indicative of human or software-controlled interaction with the computer, in dependence on the plurality of the UI cues and the output of the first classifier;

wherein the second classifier is a machine-learning based classifier trained based upon a first set of training data indicative of human interaction and a second set of training data indicative of software-controlled interaction, and the first classifier is a machine-learning based classifier trained based upon a third set of training data indicative of random interaction and a combined set of training data comprising the first and second sets of training data;

determining whether the interaction data is indicative of human interaction with the computer based on both the output of the first classifier and an output of the second classifier; and

perform an action in dependence on the determination of whether the interaction data is indicative of human interaction with the computer.


**Patentansprüche**

1. Computer-implementiertes Verfahren zum Identifizieren menschlicher Interaktion mit einem Computer, umfassend:

Empfangen (410) von Interaktionsdaten, die indikativ für eine Interaktion mit dem Computer sind, wobei die Interaktionsdaten Ereignisdaten umfassen, die indikativ für Interaktionsereignisse mit einer Benutzerschnittstelle, UI sind, die von dem Computer bereitgestellt wird, und wobei die Ereignisdaten indikativ für eine oder mehrere Bewegungen einer Zeigevorrichtung, eine Bewegung eines Cursors als Reaktion auf eine Berührung, die auf eine berührungsempfindliches Vorrichtung ausgeübt wird, eine Aktivierung einer Steuerung der UI und eine Betätigung einer Tastatur, die mit dem Computer assoziiert ist, sind;

Bestimmen (420) einer oder mehrerer UI-Angaben aus den Interaktionsdaten;

Bestimmen, (440) bei einem ersten Klassifikator, (710) ob die Interaktionsdaten indikativ für eine gerichtete oder zufällige Interaktion mit dem Computer sind, in Abhängigkeit von einer Vielzahl der UI-Angaben;

Bereitstellen einer Ausgabe des ersten Klassifikators an einen zweiten Klassifikator;

Bestimmen, (440) bei dem zweiten Klassifikator, (720) ob die Interaktionsdaten indikativ für eine menschliche oder softwaregesteuerte Interaktion mit dem Computer sind, in Abhängigkeit von der Vielzahl der UI-Angaben und der Ausgabe des ersten Klassifikators;

wobei der zweite Klassifikator ein auf maschinellem Lernen basierender Klassifikator ist, der basierend auf einem ersten Satz von Trainingsdaten, die indikativ für menschliche Interaktion sind, und einem zweiten Satz von Trainingsdaten, die indikativ für eine softwaregesteuerte Interaktion sind, trainiert wird, und der erste Klassifikator ein auf maschinellem Lernen basierender Klassifikator ist, der basierend auf einem dritten Satz von Trainingsdaten, die indikativ für zufällige Interaktion sind, und einem kombinierten Satz von Trainingsdaten, der den ersten und zweiten Satz von Trainingsdaten umfasst, trainiert wird;

Bestimmen (450), ob die Interaktionsdaten indikativ für eine menschliche Interaktion mit dem Computer sind, basierend sowohl auf der Ausgabe des ersten Klassifikators als auch auf einer Ausgabe des zweiten Klassifikators; und

Ausführen einer Aktion (460, 470) in Abhängigkeit von der Bestimmung, ob die Interaktionsdaten indikativ für eine menschliche Interaktion mit dem Computer sind.

2. Verfahren nach Anspruch 1, umfassend ein Bereitstellen der Ausgabe von dem ersten Klassifikator an den zweiten Klassifikator der Interaktionsdaten, die indikativ für eine gerichtete Interaktion mit dem Computer sind.

3. Verfahren nach Anspruch 2, wobei die Interaktionsdaten basierend auf einer Ausgabe nur des ersten Klassifikators als indikativ für eine unzulässige Interaktion mit dem Computer bestimmt werden, wobei die unzulässige Interaktion die softwaregesteuerte Interaktion oder die zufällige Interaktion umfasst.

4. Verfahren nach einem der vorherigen Ansprüche, wobei die gerichtete Interaktion durch eine von einer menschlichen oder softwaregesteuerten Interaktion gelenkt wird.

5. Verfahren nach einem der vorherigen Ansprüche, wobei jede der einen oder mehreren UI-Angaben indikativ für eine Interaktion mit dem Computer ist, und optional wobei die UI-Angabe indikativ für mindestens eines von Folgenden ist: einen Tastendruck, der an dem Computer empfangen wird, oder eines oder beides von einer Bewegung der Zeigevorrichtung oder einem Klicken der Zeigevorrichtung.

6. Verfahren nach Anspruch 5, wobei, wenn die UI-Angabe indikativ für eine Bewegung der Zeigevorrichtung ist, die UI-Angabe indikativ für eine vorbestimmte Dauer der Bewegung der Zeigevorrichtung ist.

7. Verfahren nach Anspruch 5 oder 6, umfassend ein Bestimmen eines oder mehrerer Parameter der UI-Angabe, und optional wobei der eine oder die mehreren Parameter eine Dauer der UI-Angabe umfassen.

8. Verfahren nach Anspruch 7, wobei der eine oder die mehreren Parameter einen Abstand der Bewegung der Zeigevorrichtung, eine Verschiebung der Bewegung der Zeigevorrichtung, eine durchschnittliche Geschwindigkeit der Bewegung der Zeigevorrichtung und einen Verschiebungswinkel der Bewegung der Zeigevorrichtung umfassen.

9. Verfahren nach Anspruch 5 oder 6, wobei der eine oder die mehreren Parameter eine Bewegungseffizienz der Zeigevorrichtung umfassen, wobei die Bewegungseffizienz basierend auf einer Entfernung und Verschiebung der Bewegung der Zeigevorrichtung bestimmt wird.

10. Verfahren nach einem der vorherigen Ansprüche, wobei der erste und der zweite Klassifikator angeordnet sind, um basierend auf einem oder mehreren UI-Angaben zu bestimmen, ob die Interaktionsdaten indikativ für eine menschliche Interaktion mit dem Computer sind.

11. Verfahren nach Anspruch 10, wenn abhängig von einem der Ansprüche 7 bis 9 oder einem davon abhängigen Anspruch, wobei der erste und der zweite Klassifikator angeordnet sind, um basierend auf einem oder mehreren Parametern, die mit einer oder mehreren UI-Angaben assoziiert sind, zu bestimmen, ob die Interaktionsdaten indikativ für eine menschliche Interaktion mit dem Computer sind.

12. Verfahren nach einem der vorherigen Ansprüche, wobei mindestens eines von Folgenden: einer oder beide von dem ersten und dem zweiten Klassifikator sind Entscheidungsbaum-Klassifikatoren, oder die Aktion umfasst ein Zulassen eines Zugriffs des Benutzercomputers auf einen Dienst.

13. Verfahren nach Anspruch 12, wobei der Dienst durch eine Softwareanwendung bereitgestellt wird, wobei die Softwareanwendung in Abhängigkeit von der Bestimmung, ob die Interaktion mit dem Computer eine Wiederholung einer früheren Interaktion mit dem Computer ist, mit dem Benutzercomputer kommunizieren kann, und wobei die Softwareanwendung optional funktionsfähig auf einem Dienstcomputer ausgeführt wird.

14. Rechenvorrichtung, umfassend:

einen Prozessor;
computerlesbaren Speicher, der mit dem Prozessor assoziiert ist, wobei der Speicher computerausführbare Anweisungen speichert, die, wenn sie von dem Prozessor ausgeführt werden, den Prozessor zu Folgendem veranlassen:

Empfangen von Interaktionsdaten, die indikativ für eine Interaktion mit dem Computer sind, wobei die Interaktionsdaten Ereignisdaten umfassen, die indikativ für Interaktionsereignisse mit einer Benutzerschnittstelle, UI sind, die von dem Computer bereitgestellt wird, und wobei die Ereignisdaten indikativ für eine oder mehrere Bewegungen einer Zeigevorrichtung, eine Bewegung eines Cursors als Reaktion auf eine Berührung, die auf eine berührungsempfindliches Vorrichtung ausgeübt wird, eine Aktivierung einer Steuerung der UI und eine Betätigung einer Tastatur, die mit dem Computer assoziiert ist, sind;

Bestimmen einer oder mehrerer UI-Angaben aus den Interaktionsdaten;

Bestimmen, bei einem ersten Klassifikator, ob die Interaktionsdaten indikativ für eine gerichtete oder zufällige Interaktion mit dem Computer sind, in Abhängigkeit von einer Vielzahl der UI-Angaben;

Bereitstellen einer Ausgabe des ersten Klassifikators an einen zweiten Klassifikator;

Bestimmen, bei dem zweiten Klassifikator, ob die Interaktionsdaten indikativ für eine menschliche oder softwaregesteuerte Interaktion mit dem Computer sind, in Abhängigkeit von der Vielzahl der UI-Angaben und der Ausgabe des ersten Klassifikators;

wobei der zweite Klassifikator ein auf maschinellem Lernen basierender Klassifikator ist, der basierend auf einem ersten Satz von Trainingsdaten, die indikativ für menschliche Interaktion sind, und einem zweiten Satz von Trainingsdaten, die indikativ für eine softwaregesteuerte Interaktion sind, trainiert wird, und der erste Klassifikator ein auf maschinellem Lernen basierender Klassifikator ist, der basierend auf einem dritten Satz von Trainingsdaten, die indikativ für zufällige Interaktion sind, und einem kombinierten Satz von Trainingsdaten, der den ersten und zweiten Satz von Trainingsdaten umfasst, trainiert wird;

Bestimmen, ob die Interaktionsdaten indikativ für eine menschliche Interaktion mit dem Computer sind, basierend sowohl auf der Ausgabe des ersten Klassifikators als auch auf einer Ausgabe des zweiten Klassifikators; und

Ausführen einer Aktion in Abhängigkeit von der Bestimmung, ob die Interaktionsdaten indikativ für eine menschliche Interaktion mit dem Computer sind.

15. Computersystem, umfassend:

einen Benutzercomputer;

die Rechenvorrichtung nach Anspruch 14, die angeordnet ist, um Ereignisdaten von dem Benutzercomputer zu empfangen; und

einen Dienstcomputer zum Bereitstellen eines Dienstes an den Benutzercomputer;

wobei die Rechenvorrichtung angeordnet ist, um es dem Dienstcomputer zu ermöglichen, den Dienst in Abhängigkeit davon an den Benutzercomputer bereitzustellen, ob die Interaktionsdaten indikativ für eine menschliche Interaktion mit dem Computer sind.

16. Computersystem nach Anspruch 15, wobei der Dienstcomputer eine Softwareanwendung umfasst, die funktionsfähig auf einem oder mehreren Prozessoren des Dienstcomputers ausgeführt wird, wobei die Softwareanwendung mit dem Benutzercomputer kommuniziert, um den Dienst an den Benutzercomputer bereitzustellen.

17. Computersoftware, die, wenn sie von einem Computer ausgeführt wird, den Computer veranlasst, ein Verfahren auszuführen, umfassend die folgenden Schritte:

Empfangen von Interaktionsdaten, die indikativ für eine Interaktion mit dem Computer sind, wobei die Interaktionsdaten Ereignisdaten umfassen, die indikativ für Interaktionsereignisse mit einer Benutzerschnittstelle, UI sind, die von dem Computer bereitgestellt wird, und wobei die Ereignisdaten indikativ für eine oder mehrere Bewegungen einer Zeigevorrichtung, eine Bewegung eines Cursors als Reaktion auf eine Berührung, die auf eine berührungsempfindliches Vorrichtung ausgeübt wird, eine Aktivierung einer Steuerung der UI und eine Betätigung einer Tastatur, die mit dem Computer assoziiert ist, sind;

Bestimmen einer oder mehrerer UI-Angaben aus den Interaktionsdaten;

Bestimmen, bei einem ersten Klassifikator, ob die Interaktionsdaten indikativ für eine gerichtete oder zufällige Interaktion mit dem Computer sind, in Abhängigkeit von einer Vielzahl der UI-Angaben;

Bereitstellen einer Ausgabe des ersten Klassifikators an einen zweiten Klassifikator;

Bestimmen, bei dem zweiten Klassifikator, ob die Interaktionsdaten indikativ für eine menschliche oder softwaregesteuerte Interaktion mit dem Computer sind, in Abhängigkeit von der Vielzahl der UI-Angaben und der Ausgabe des ersten Klassifikators;

wobei der zweite Klassifikator ein auf maschinellem Lernen basierender Klassifikator ist, der basierend auf einem ersten Satz von Trainingsdaten, die indikativ für menschliche Interaktion sind, und einem zweiten Satz von Trainingsdaten, die indikativ für eine softwaregesteuerte Interaktion sind, trainiert wird, und der erste Klassifikator ein auf maschinellem Lernen basierender Klassifikator ist, der basierend auf einem dritten Satz von Trainingsdaten, die indikativ für zufällige Interaktion sind, und einem kombinierten Satz von Trainingsdaten, der den ersten und zweiten Satz von Trainingsdaten umfasst, trainiert wird;

Bestimmen, ob die Interaktionsdaten indikativ für eine menschliche Interaktion mit dem Computer sind, basierend sowohl auf der Ausgabe des ersten Klassifikators als auch auf einer Ausgabe des zweiten Klassifikators; und

Ausführen einer Aktion in Abhängigkeit von der Bestimmung, ob die Interaktionsdaten indikativ für eine menschliche Interaktion mit dem Computer sind.

**Revendications**

1. Procédé mis en œuvre par ordinateur d'identification d'interaction humaine avec un ordinateur, comprenant :

   la réception (410) des données d'interaction indiquant une interaction avec l'ordinateur, lesdites données d'interaction comprenant des données d'événement indiquant des événements d'interaction avec une interface utilisateur, UI, fournie par l'ordinateur et lesdites données d'événement indiquant l'un ou plusieurs d'un mouvement d'un dispositif de pointage, d'un mouvement d'un curseur sensible au toucher appliqué à un dispositif tactile, de l'activation d'une commande de l'UI et du fonctionnement d'un clavier associé à l'ordinateur ;
   la détermination (420) d'un ou plusieurs indices UI à partir des données d'interaction ;
   la détermination (440) au niveau d'un premier classificateur (710) pour savoir si les données d'interaction indiquent une interaction dirigée ou aléatoire avec l'ordinateur en fonction d'une pluralité d'indices UI ;
   la fourniture d'une sortie du premier classificateur à un second classificateur ;
   la détermination, (440) au niveau du second classificateur, (720) pour savoir si les données d'interaction indiquent une interaction commandée par l'homme ou par logiciel avec l'ordinateur, en fonction de la pluralité d'indices UI et de la sortie du premier classificateur ;
   ledit second classificateur étant un classificateur basé sur l'apprentissage automatique formé sur la base d'un premier ensemble de données d'apprentissage indiquant une interaction humaine et d'un second ensemble de données d'apprentissage indiquant une interaction commandée par logiciel, et ledit premier classificateur étant un classificateur basé sur l'apprentissage automatique formé sur la base d'un troisième ensemble de données d'apprentissage indiquant une interaction aléatoire et d'un ensemble combiné de données d'apprentissage comprenant les premier et deuxième ensembles de données d'apprentissage ;
   la détermination (450) pour savoir si les données d'interaction indiquent une interaction humaine avec l'ordinateur sur la base à la fois de la sortie du premier classificateur et d'une sortie du second classificateur ; et
   la réalisation d'une action (460, 470) en fonction de la détermination pour savoir si les données d'interaction indiquent une interaction humaine avec l'ordinateur.

2. Procédé selon la revendication 1, comprenant la fourniture de la sortie provenant du premier classificateur au second classificateur des données d'interaction indiquant une interaction dirigée avec l'ordinateur.

3. Procédé selon la revendication 2, lesdites données d'interaction étant déterminées comme étant indicatives d'une interaction illégitime avec l'ordinateur sur la base d'une sortie du premier classificateur uniquement, ladite interaction illégitime comprenant l'interaction commandée par logiciel ou l'interaction aléatoire.

4. Procédé selon une quelconque revendication précédente, ladite interaction dirigée étant dirigée par l'une d'une interaction humaine ou commandée par un logiciel.

5. Procédé selon une quelconque revendication précédente, chacun des un ou plusieurs indices UI indiquant une interaction avec l'ordinateur, et éventuellement ledit indice UI indiquant au moins l'un parmi : une frappe reçue au niveau de l'ordinateur, ou l'un ou les deux d'un mouvement du dispositif de pointage ou d'un clic du dispositif de pointage.

6. Procédé selon la revendication 5, lorsque l'indice UI indique un mouvement du dispositif de pointage, ledit indice UI indiquant une durée prédéfinie de mouvement du dispositif de pointage.

7. Procédé selon la revendication 5 ou 6, comprenant la détermination d'un ou plusieurs paramètres de l'indice UI, et éventuellement ledit ou lesdits paramètres comprenant une durée de l'indice UI.

8. Procédé selon la revendication 7, ledit ou lesdits paramètres comprenant une distance du mouvement du dispositif de pointage, un déplacement du mouvement du dispositif de pointage, une vitesse moyenne du mouvement du dispositif de pointage et un angle de déplacement du mouvement du dispositif de pointage.

9. Procédé selon la revendication 5 ou 6, ledit ou lesdits paramètres comprenant une efficacité de mouvement du dispositif de pointage, ladite efficacité de mouvement étant déterminée sur la base d'une distance et d'un déplacement du mouvement du dispositif de pointage.

10. Procédé selon l'une quelconque d'une quelconque revendication précédente, lesdits premier et second classificateurs étant agencés pour déterminer si les données d'interaction indiquent une interaction humaine avec l'ordinateur sur la base d'un ou plusieurs indices UI.

11. Procédé selon la revendication 10 lorsqu'elle dépend de l'une quelconque des revendications 7 à 9 ou d'une quelconque revendication qui en dépend, lesdits premier et second classificateurs étant agencés pour déterminer si les données d'interaction indiquent une interaction humaine avec l'ordinateur sur la base du ou des paramètres associés avec un ou plusieurs indices UI.

12. Procédé selon une quelconque revendication précédente, au moins l'un parmi : l'un ou les deux des premier et second classificateurs étant des classificateurs d'arbre de décision ou l'action comprenant l'autorisation d'accès à un service, pour l'ordinateur utilisateur.

13. Procédé selon la revendication 12, ledit service étant fourni par une application logicielle, ladite application logicielle pouvant communiquer avec l'ordinateur utilisateur en fonction de la détermination pour savoir si l'interaction avec l'ordinateur est une répétition d'une interaction précédente avec l'ordinateur, et éventuellement ladite application logicielle s'exécutant fonctionnellement sur un ordinateur de service.

14. Appareil informatique, comprenant :

un processeur ;
une mémoire lisible par ordinateur associée au processeur, la mémoire stockant des instructions exécutables par ordinateur qui, lorsqu'elles sont exécutées par le processeur, amènent le processeur à :

recevoir des données d'interaction indiquant une interaction avec l'ordinateur, lesdites données d'interaction comprenant des données d'événement indiquant des événements d'interaction avec une interface utilisateur, UI, fournie par l'ordinateur et lesdites données d'événement indiquant l'un ou plusieurs d'un mouvement d'un dispositif de pointage, d'un mouvement d'un curseur sensible au toucher appliqué à un dispositif tactile, d'une activation d'une commande de l'UI et du fonctionnement d'un clavier associé à l'ordinateur ;
déterminer un ou plusieurs indices UI à partir des données d'interaction ;
déterminer, au niveau d'un premier classificateur, si les données d'interaction indiquent une interaction dirigée ou aléatoire avec l'ordinateur en fonction d'une pluralité d'indices UI ;
fournir une sortie du premier classificateur à un second classificateur ;
déterminer, au niveau du second classificateur, si les données d'interaction indiquent une interaction humaine ou commandée par logiciel avec l'ordinateur, en fonction de la pluralité d'indices UI et de la sortie du premier classificateur ;
ledit second classificateur étant un classificateur basé sur l'apprentissage automatique formé sur la base d'un premier ensemble de données d'apprentissage indiquant une interaction humaine et d'un second ensemble de données d'apprentissage indiquant une interaction commandée par logiciel, et ledit premier classificateur étant un classificateur basé sur l'apprentissage automatique formé sur la base d'un troisième ensemble de données d'apprentissage indiquant une interaction aléatoire et d'un ensemble combiné de données d'apprentissage comprenant les premier et deuxième ensembles de données d'apprentissage ;
déterminer si les données d'interaction indiquent une interaction humaine avec l'ordinateur sur la base à la fois de la sortie du premier classificateur et d'une sortie du second classificateur ; et
réaliser une action en fonction de la détermination pour savoir si les données d'interaction indiquent une interaction humaine avec l'ordinateur.

15. Système informatique comprenant :

un ordinateur utilisateur ;
l'appareil informatique selon la revendication 14 agencé pour recevoir des données d'événement en provenance de l'ordinateur utilisateur ; et
un ordinateur de service destiné à fournir un service à l'ordinateur utilisateur ;
ledit appareil informatique étant agencé pour permettre à l'ordinateur de service de fournir le service à l'ordinateur utilisateur en fonction des données d'interaction indiquant ou non une interaction humaine avec l'ordinateur.

**16.** Système informatique selon la revendication 15, ledit ordinateur de service comprenant une application logicielle s'exécutant fonctionnellement sur un ou plusieurs processeurs de l'ordinateur de service, ladite application logicielle communiquant avec l'ordinateur utilisateur pour fournir le service à l'ordinateur utilisateur.

**17.** Logiciel informatique qui, lorsqu'il est exécuté par un ordinateur, amène l'ordinateur à réaliser un procédé comprenant les étapes de :

réception des données d'interaction indiquant une interaction avec l'ordinateur, lesdites données d'interaction comprenant des données d'événement indiquant des événements d'interaction avec une interface utilisateur, UI, fournie par l'ordinateur et lesdites données d'événement indiquant l'un ou plusieurs d'un mouvement d'un dispositif de pointage, d'un mouvement d'un curseur sensible au toucher appliqué à un dispositif tactile, de l'activation d'une commande de l'UI et du fonctionnement d'un clavier associé à l'ordinateur ;
détermination d'un ou de plusieurs indices UI à partir des données d'interaction ;
détermination, au niveau d'un premier classificateur, pour savoir si les données d'interaction indiquent une interaction dirigée ou aléatoire avec l'ordinateur en fonction d'une pluralité d'indices UI ;
fourniture d'une sortie du premier classificateur à un second classificateur ;
détermination, au niveau du second classificateur, pour savoir si les données d'interaction indiquent une interaction humaine ou commandée par logiciel avec l'ordinateur, en fonction de la pluralité d'indices UI et de la sortie du premier classificateur ;
ledit second classificateur étant un classificateur basé sur l'apprentissage automatique formé sur la base d'un premier ensemble de données d'apprentissage indiquant une interaction humaine et d'un second ensemble de données d'apprentissage indiquant une interaction commandée par logiciel, et ledit premier classificateur étant un classificateur basé sur l'apprentissage automatique formé sur la base d'un troisième ensemble de données d'apprentissage indiquant une interaction aléatoire et d'un ensemble combiné de données d'apprentissage comprenant les premier et deuxième ensembles de données d'apprentissage ;
détermination pour savoir si les données d'interaction indiquent une interaction humaine avec l'ordinateur sur la base à la fois de la sortie du premier classificateur et d'une sortie du second classificateur ; et
réaliser une action en fonction de la détermination pour savoir si les données d'interaction indiquent une interaction humaine avec l'ordinateur.

100

Fig. 1

100

Fig. 2

Fig. 3

Fig. 5

Fig. 4

Fig. 6

Fig. 7

Fig. 8

Fig. 9

**EP 3 580 677 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014344927 A

- US 2016315948 A

**Non-patent literature cited in the description**

- **ZI CHU et al.** Blog or block: Detecting blog bots through behavioural biometrics. *Computer Networks,* 01 February 2013, vol. 57, 634-646